Europäisches Patentamt

(19) European Patent Office  (11) Veröffentlichungsnummer : **0 012 740**
Office européen des brevets  **B1**

(12) **EUROPÄISCHE PATENTSCHRIFT**

(12)

(45) Veröffentlichungstag der Patentschrift :  (51) Int. Cl.³ : **B 03 B  5/66**, G 01 N 15/02
**16.02.83**

(21) Anmeldenummer : **79890061.9**

(22) Anmeldetag : **12.12.79**

(54) Verfahren und Vorrichtung zur Ermittlung der Kornverteilung in Korngemischen.

(30) Priorität : **13.12.78 AT 8872/78**  (73) Patentinhaber : **Österreichisches Forschungszentrum**
**22.12.78 AT 9226/78**  **Seibersdorf Gesellschaft m.b.H.**
**Lenaugasse 10**
**A-1082 Wien (AT)**

(43) Veröffentlichungstag der Anmeldung :
**25.06.80 Patentblatt 80/13**  (72) Erfinder : **Donhoffer, Dieter, Dr.**
**Fleschgasse 15**
**A-1130 Wien (AT)**
(45) Bekanntmachung des Hinweises auf die Patenter-  Erfinder : **Eder, Theodor, Dipl.-Ing.**
teilung : **16.02.83 Patentblatt 83/07**  **Herzogbergstrasse 149**
**A-2380 Perchtoldsdorf (AT)**
(84) Benannte Vertragsstaaten :  Erfinder : **Rötzer, Harald, Dr.**
**AT DE GB SE**  **Klimschgasse 4/5**
**A-1030 Wien (AT)**

(56) Entgegenhaltungen :
**DE A 1 278 147**
**DE A 1 954 611**
**DE A 2 700 810**
**DE B 1 013 446**
**US A 2 631 726**
**US A 2 899 057**
**US A 3 739 180**
**US A 3 952 207**

Verfahren und Vorrichtung zur Ermittlung der Kornverteilung in Korngemischen

Die Erfindung bezieht sich auf ein Verfahren sowie eine Vorrichtung zur Ermittlung der Kornverteilung in Korngemischen, gemäß Oberbegriff von Anspruch 1 bzw. von Anspruch 6.

In verschiedenen Bereichen der Technik, in welchen mit körnigem Gut, wie natürlichem oder gebrochenem Sand, oder gebrochenen Erzen, gearbeitet wird, ist die Kornverteilung des Korngutes oft von ebensolchem Einfluß wie die chemische oder andere physikalische Beschaffenheit des Kornes.

Beispielsweise ist für die Festigkeit von Beton nicht nur die Festigkeit der Zuschlagstoffe, sondern auch ihre von der Kornverteilung abhängige Packungsdichte bzw. ihre von der Korngestalt mitbestimmte spezifische Oberfläche und die letztere auch für die Aufbereitung mancher Erze von Bedeutung, d. h., daß in diesen und auch in anderen Fällen eine bestimmte Sollverteilung der Korndurchmesser notwendig und daher anzustreben ist. Die Istverteilung von aus natürlichen Lagerstellen entnommenen oder auch gebrochenen Sanden weicht oft von der Sollverteilung erheblich ab. Bei jeder Verwendung von Korngut, bei der es auf die Kornverteilung ankommt, namentlich bei der Herstellung von Fertigteilen aus Beton mit Sand von 0 bis etwa 4 mm Korndurchmesser als Zuschlag, ist daher die Sollverteilung mit ausreichender Annäherung herzustellen und deshalb zunächst die Istverteilung zu ermitteln.

Zur Bestimmung der Korngrößenverteilung ist die sogenannte Schlämmanalyse seit langem bekannt. Man unterscheidet bei dieser Analyse zwei prinzipiell verschiedene Methoden, und zwar die Sedimentationsmethoden und die Spülmethoden. Die Sedimentation kommt nur bei sehr feinen Sanden oder dgl. in Frage, wenn man bedenkt, daß bereits ein Quarzkorn mit einem Durchmesser von 0,2 mm etwa 20 mm pro Sekunde fällt.

Die Spülmethode wird für grobere Systeme angewandt, wobei die Teilchen zumindest eine Fallgeschwindigkeit von einigen mm pro Sekunde besitzen sollen. Die Vorgangsweise ist hiebei wie folgt. In einem senkrecht stehenden Zylinder, in dem sich Wasser und das aufzutrennende Schüttgut befinden, wird von unten Wasser mit einer konstanten Geschwindigkeit eingeleitet. Die Strömung ist parallel und entgegengesetzt der Schwerkraftsrichtung orientiert und wird über eine Zeitspanne konstant gehalten. Es werden hiebei jede Korngrößen aus dem Zylinder ausgetragen, die eine kleinere Sinkgeschwindigkeit besitzen als die Geschwindigkeit der Strömung ist. Die Geschwindigkeit des Flüssigkeitsstroms wird stufenweise angehoben, wodurch eine Auftrennung des Schüttgutes erreicht werden kann. Die Gewichtsbestimmung der auf diese Weise getrennten Kornfraktionen erfolgt nach anschließender Trocknung durch Wägung. Die Korngrößen, welche üblicherweise mit der Spülmethode bestimmt werden, liegen zwischen 0,1 bis 0,01 mm. Der anschließende Bereich von 1 bis 0,1 mm wird üblicherweise durch mechanische Siebung und der Bereich zwischen 1 und 5 mm mit Handsiebung bestimmt. Ein derartiges Verfahren ist jedoch sehr zeitaufwendig und daher insbesonderer für die Anwendung bei Prozeßsteuerungen, wie z. B. bei der Herstellung von Beton für Fertigteile nicht anwendbar.

Ein anderes Verfahren ist das zum Klassieren von Korngut oft benutzte Trennen im laminar fließenden Horizontalstrom, wobei es sich um eine parallele oder eine divergierende Strömung handeln kann (DE-A-1 954 611). Die Erfahrung aus der Horizontalschlämmtechnik, daß man durch Schlämmen von Korngut in einer horizontal strömenden Trägerflüssigkeit eine Auftrennung nach Kornparametern erhält, sagt nichts über die Anwendbarkeit dieses Verfahrens zur Ermittlung der Kornverteilung aus, da es in der Horizontalschlämmtechnik z. B. bei der Trennung von Schleifmitteln oder von Kaolin in der Papierindustrie im wesentlichen nur darauf ankommt, daß jede Kornfraktion von Überkorn frei ist.

Ein anderer in der Literatur bekannt gewordener Vorschlag (DE-A-2 304 879 bzw. US-A-3 952 207) setzt einen kontinuierlich fließenden Meßstrom des Probengutes voraus. Dieser Meßstrom wird in einem laminaren Gas- oder Flüssigkeitsstrom normal zu dessen Strömungsrichtung eingebracht, dort in den einzelnen Körnern als Folge ihrer Korngröße zukommenden Bahnen aufgefächert und längs einer linienförmigen Bahn wiederholt mit einer Vorrichtung zur Bestimmung der jeweiligen Menge der verschiedenen Korngrößen abgetastet. Die Vorrichtung weist eine Strahlungsquelle, die eine eng gebündelte Strahlung aussendet, und einen Strahlungsempfänger auf. Die Strahlungsquelle steht auf einer, der Empfänger auf der anderen Seite eines von dem Strahlenbündel durchsetzten Troges, wobei der Empfänger, z. B. eine Photozelle, ein Signal abgibt, das verkehrtproportional der jeweils von den im Strahlengang befindlichen Menge der Körner ist. Diese Meßmethodik stellt hohe Anforderungen an die Kontinuierlichkeit des Meßstromes und ist deshalb in der Praxis und insbesondere, wenn nur fallweise entnommene Probenmengen zur Verfügung stehen, grundsätzlich nich anwendbar. Abgesehen davon kann mit einer derartigen Vorrichtung zur Bestimmung der Kornverteilung jeweils nur ein enger Bereich, z. B. der Korngrößenbereich von 0 bis etwa 0,2 mm erfaßt werden, so daß für den ebenfalls erforderlichen Bereich von 0,2 bis etwa 5 mm daher mindestens ein weiteres Gerät erforderlich ist. Die Verwendung von mindestens zwei Einrichtungen für die quantitative Ermittlung der Kornverteilung bedingt jedoch eine vorherige quantitative Aufteilung des Probengutes in entsprechende Korngrößenfraktionen. Dies bedingt jedoch einen wesentlich erhöhten technischen Aufwand bei gleichzeitiger Verschlechterung der Analysenergebnisse.

Ferner ist ein Verfahren und eine Vorrichtung zum Auftrennen von Korngut nach einem Parameter, wie die Kornabmessungen, bekannt, bei welchem auf die Oberfläche einer horizontalen und laminar strömenden Trennflüssigkeit in Nähe ihrer Eintrittsstelle ein das zu untersuchende Korngut — der Durchmesser des oberen Grenzkornes muß offensichtlich bei oder unter etwa 0,06 mm liegen — enthaltende Trägerflüssigkeit aufgegeben wird (Fr-A-2 019 687). An dem Austrittsende des mehrere, in Abständen von etwa 12 cm angeordnete, Netze durchsetzenden Stromes ist eine Anzahl von in verschiedenen Niveaus übereinander liegenden Fraktionsauslässen angebracht. Dieses Verfahren ist zum Trennen von Korngemischen, die neben dem Feinanteil auch gröbere Körner enthalten, wie dies z. B. bei den Zuschlagstoffen für die Herstellung von Beton der Fall ist, nicht geeignet.

In der US-A-2 631 726 ist ein Gerät zur Klassifizierung von Kornfraktionen beschrieben, in welchem das zu untersuchende Material zunächst mit einer Trägerflüssigkeit innig vermischt und anschließend dieses Gemenge in eine Trennflüssigkeit injiziert wird. Durch ein kompliziertes System von Klappen, Leitblechen und Absaugkästen wird eine sowohl aufwärts, gegen die Schwerkraft, als auch seitwärts gerichtete turbulenzfreie Strömung in einer Trennkammer aufgebaut, in welchem über die Absaugkasten sowohl die Trennflüssigkeit als auch die aufgetrennte Korn fraktionen abgesaugt, und letztere der qualitativen Bestimmung zugeführt werden. Eine Auftrennung in derartigen Strömungsverhältnissen ist sehr wohl für die Klassifizierung (grobe Auftrennung, wobei ein Anteil an Über- bzw. Unterkorn in Kauf genommen wird) geeignet, erfüllt jedoch nicht die wesentlich grösseren Anforderungen wie sie an Analysen gestellt werden. Darüber hinaus kann auf Grund der Tatsache, daß die Auftrennung des Probengutes nur in, in unterschiedlicher Höhe der Kammer, mit der Flüssigkeit ausgetragenen Kornfraktionen erfolgt jeweils nur eine geringe Bandbreite von Korngemischen aufgetrennt werden. Zur Auftrennung eines Korngemisches von wenigen μm bis zu mehreren mm wären mehrere derartige Trennkammern, mit jeweils unterschiedlichen Strömungsverhältnissen erforderlich, wodurch sowohl die Genauigkeit der Analysen verschlechtert als auch der erforderliche Aufwand stark erhöht wird.

Ferner ist ein Verfahren und eine Anordnung in der DE-B-10 13 446 beschrieben, in welchem zur Untersuchung von in einem Gas enthaltenen Aeorsolen diese in einem gleichartigen Trenngasstrom gleichgeschwindig turbulenzfrei eingebracht, in diesem unter Einwirkung des zu der Trenngasströmungsrichtung einen Winkel ein Schließenden Kraftfeldes (z. B. Schwerefeld) aufgetrennt und anschießend auf optischem Weg die Mengen der aufgetrennten Aerosolfraktionen bestimmt werden. Ein derartiges Verfahren ist für die Auftrennung von Aerosol geeignet, versagt jedoch vollständig wenn sowohl grobe Kornfraktionen (Durchmesser 0,1 mm bis einige mm) als auch feine Kornfraktionen (wenige μm bis 100 μm) gleichzeitig in einer Vorrichtung aufgetrennt werden sollen. Für die notwendige geometrische Auftrennung von groben Kornfraktionen mittels eines Trägergases wären so hohe Strömungsgeschwindigkeiten erforderlich, daß die Herstellung einer für die analytische Auftrennung erforderlichen laminaren Strömung nicht möglich wäre, bzw. die Trennstrecke für die feine Kornfraktion unrealistisch groß würde.

Aufgabe der Erfindung ist es, ein Verfahren und eine Vorrichtung zu schaffen, mit dem bzw. der die Kornverteilung von Korngut mit stark unterschiedlicher Zusammensetzung, insbesondere im Bereich von 0 bis 5 mm, verläßlich und rasch ermittelt werden kann, wobei der gesamte Bereich der in Betracht kommenden Korndurchmesser mit einem Meßvorgang und mit einem Gerät zu erfassen ist.

Die Aufgabe der Erfindung wird durch ein Verfahren gemäß Kennzeichenteil des Anspruches 1 bzw. mittels einer Vorrichtung gemäß Kennzeichenteil des Anspruches 6 gelöst. Ausgestaltungen dieser Aufgabenlösung ergeben sich aus abhängigen Ansprüchen 2 mit 5 bzw. 7 mit 19.

Das erfindungsgemäße Verfahren bzw. die erfindungsgemäße Vorrichtung ermöglicht eine derartig rasche Ermittlung der Korngrößenverteilungen, so daß bei Prozessen, wie z. B. der Herstellung von Beton für Fertigteile, für jede Charge aufgrund der ermittelten Istwerte noch während der Mischdauer der vorhergehenden Charge die Kornverteilung für die folgende Charge auf den Sollwert gebracht werden kann, wobei die einzelnen Messungen der Kornverteilung unmittelbar aufeinander folgen.

Das erfindungsgemäße Verfahren zur Bestimmung der Korngrößenverteilung von Schüttgut, insbesondere von Sanden, beruht auf der Auftrennung des innig mit einer Trägerflüssigkeit gemischten Schüttgutes unter Einwirkung einer, vorzugsweise horizontalen und laminaren Strömung einer Trennflüssigkeit und der hiezu in einem Winkel, vorzugweise einem senkrechten, wirkenden Schwerkraft, wobei die Strömung der Trennflüssigkeit und des Korn-Trägerflüssigkeitsgemisches sowohl der Richtung als auch der Größe nach praktisch gleich sind. Die durch eine Laminarisierungseinrichtung erzeugte laminare Strömung erstreckt sich im wesentlichen über die gesamte Höhe der Trennkammer. Das nach der Laminarisierungseinrichtung im oberen Bereich der laminaren Strömung in die Trennkammer eingebrachte Probengut, wird in dem von Einbauten freien Trennraum aufgrund der unterschiedlichen Fallgeschwindigkeit geometrisch aufgetrennt, wobei die größeren Körner noch innerhalb der Trennkammer zu Boden sinken und dort in Auffangkammern, in denen die Trennflüssigkeit im wesentlichen ruht, gesammelt werden und gegebenenfalls die kleineren Körner mit der Trennflüssigkeit aus der Trennkammer ausgetragen und am Ende der Trennkammer in Sammelkammern gesammelt werden. Eine für analytische Bedingungen ausreichende Trennschärfe wird dann erreicht, wenn das durch inniges Mischen aufbereitete Korn-Trägerflüssigkeit-Gemisch in den von den beiden Seitenwänden der Trennkammer, in welche Führungsleisten eingebaut sind, gebildeten, durch eine Zwischenschichte getrennten und von Einbauten freien, Trennraum eingebracht wird. Dies wird insbesondere dann gewährleistet, wenn der freie Querschnitt des Einströmrohres für das Korn-Trägerflüssigkeit-Gemisch höchstens gleich dem von Einbauten freien Querschnitt der Trennkammer ist. Eine für die Bestimmung der Kornverteilung von Sanden geeignete Auftrennung wird dann erreicht, wenn Wasser sowohl als Trägerflüssigkeit als auch als Trennflüssigkeit verwendet wird.

Die Mengen der gesammelten Kornfraktionen werden anschließend quantitativ bestimmt. Die mit der Trennflüssigkeit über die Sammelkammern ausgetragenen Probenteile werden nach an sich bekannten Verfahren optisch, z. B. mittels Lichtabsorption oder Streuung in Kuvetten, im strömenden Medium bestimmt. Die in den Auffangkammern gesammelten Probenteile werden jeweils für jede Fraktion getrennt chargenweise über eine Schleuse durch Absinken in der ruhenden Trennflüssigkeit auf eine Wägevorrichtung aufgebracht. Durch Wägung in der ruhenden Flüssigkeit werden, insbesondere die groben Kornfraktionen, bestimmt. Anschließend wird die jeweilige Charge durch Drehen der Wägevorrichtung in der ruhenden Flüssigkeit entleert und in einem Sammelgefäß aufgefangen sowie die Wägevorrichtung anschließend wieder in die Wägestellung zurückgeschwenkt. Durch dieses erfindungsgemäße Verfahren zur Mengenbestimmung der groben Kornfraktionen verbleiben die Kornfraktionen in der Flüssigkeit und es erfolgt auch während der Mengenbestimmung keine störende Rückwirkung auf die laminare Strömung in der Trennkammer.

Die Erfindung erstreckt sich auch auf eine Vorrichtung zur Durchführung des Verfahrens. Eine besonders günstige Ausführung der Probenaufbereitung, um eine analytische Auftrennung des Probengutes und einen möglichst hohen Probendurchsatz zur erzielen, wird durch die erfindungsgemäße Probenzulaufeinrichtung gewährleistet. Dies wird durch das Einwirken von, insbesondere, linearen, Schwingungen mit Frequenzen bis zu 1 kHz, vorzugsweise 50 Hz, die entweder direkt der Trägerflüssigkeit aufgeprägt werden oder auf das Einströmrohr wirken, auf die durch mechanisches Mischen, insbesondere durch Rühren, bereits vorgemischte Probe-Trägerflüssigkeitsmischung erreicht. Eine besonders günstige, rasche und innige Durchmischung wird dann erzielt, wenn mehrere Schwingungen auf das aufzubringende Probengut einwirken, wobei die Schwingungen zueinander entweder phasenverschoben, richtungsverschieden oder unterschiedlich in ihrer Frequenz sind. Durch die erfindungsgemäße Anordnung wird überraschenderweise keine störende Einwirkung der Schwingungen in der Trägerflüssigkeit auf die laminar strömende Trennflüssigkeit bewirkt.

Die erfindungsgemäße Vorrichtung zur Bestimmung der Korngrößenverteilung von Schüttgut, insbesondere im Bereich von 0 bis 5 mm Korngröße, wird in einer seitlich von zwei parallelen oder in Strömungsrichtung divergierenden an den Enden begrenzten, vorzugsweise trogförmigen Trennkammern durchgeführt. Der Trennflüssigkeitseinlauf und der Ablauf der Trennflüssigkeit befinden sich an den beiden einander gegenüberliegenden Enden der Trennkammer. Die Trennflüssigkeit strömt laminar von einem Ende zum anderen Ende der Kammer und im wesentlichen horizontal über die gesamte Höhe der Trennkammern. Die Trennflüssigkeit strömt über eine Einlaufkammer durch eine spezielle Laminarisierungseinrichtung in die Trennkammer. Die Laminarisierungseinrichtung besteht aus mehreren unmittelbar hintereinander angeordneten gegeneinander versetzten Seiben mit unterschiedlicher Maschenweite. Eine andere Ausführungsform ist durch vertikale, dicht untereinander angeordnete Einlaufdüsen mit unmittelbar nachgeschalteten Gitter(n) gegeben. In der erfindungsgemäßen Vorrichtung wird die Aufrechterhaltung der für die Auftrennung günstigen weitgehenden laminaren Strömung in der Trennkammer auf einfache Weise im wesentlichen auch dadurch erreicht, daß die über die gesamte Höhe der Trennkammer einströmende Trennflüssigkeit auch an der senkrecht oder schräg ausgebildeten Auslaufseite über die gesamte Höhe der Trennkammer ausströmt und daß an die Seitenwände der Trennkammer Führungsleisten angebracht sind. Diese Führungsleisten besitzen eine glatte schräg nach unten weisende Oberfläche, so daß störende Ablagerungen auf den Führungsleisten vermieden sind. Dies ist insbesondere bei mehreren, unmittelbar hintereinander folgenden Messungen unbedingt erforderlich. Als Führungsleisten sind sowohl Lamellen als auch Leisten mit verschiedenen Profilformen geeignet. Die Führungsleisten sind entweder einseitig oder beidseitig angeordnet, wobei sie jeweils zwischen 5 und 30 % der Breite der Trennkammer einnehmen.

Durch die spezielle Ausführung des Ablaufes der Trennflüssigkeit mit senkrecht zur Laminarströmung gerichteten Lamellen wird auch am Ausgang der Trennkammer weitgehend die Ausbildung von die Auftrennung störenden Turbulenzen verhindert.

Das Einbringen des Probengutes in die Trennkammer mit gleich großer und gleichgerichteter Strömungsgeschwindigkeit wie die Trennflüssigkeit erfolgt nach der Laminarisierungseinrichtung durch das Einströmrohr. In einer Vormischeinrichtung wird, vorteilhafterweise durch mechanisches Rühren, ein grobes Mischen des Probengutes mit der Trägerflüssigkeit erzielt. Das so vorbereitete Probe-Trägerflüssigkeitsgemisch wird anschließend im Einströmrohr durch die Einwirkung von Schingungen so innig gemischt, daß eine für analytische Zwecke geeignete Auftrennung nach Korngrößen in der Trennkammer gewährleistet wird und eine Verfälschung durch aneinander haftende oder mit einander verbundene Körner weitgehend verhinder wird. Eine günstige Durchmischung im Einlaufrohr wird durch die Aufbringung von Schwingungen auf das Einlaufrohr bewirkt. Eine besonders vorteilhafte Ausführungsform besteht darin mehrere in verschiedene Richtungen wirkende Schwingungen unter Umständen phasenverschoben und/oder mit verschieden Frequenzen, auf das Einlaufrohr wirken zu lassen. Eine besonders einfache und günstige Ausführungsform besteht darin, daß die Schwingungen direk auf die Trägerflüssigkeit, z. B. in einen Pulsationsgefäß übertragen werden. Als Schwingungsüberträger finden z. B. Membranen, Kolben oder Ähnliches Verwendung. Diese Übertragungseinrichtungen werden vorzugsweise durch Induktionssysteme angeregt.

Die Anzahl der Kornfraktionen kann besonders hoch und die Dimension der Trennkammer in Richtung des Flüssigkeitsstromes besonders gering gehalten werden, wenn einerseits am Boden der Trennkammer zwei oder mehrere Auffangkammern für das innerhalb der Trennkammer zu Boden sinkende Gut angeordnet werden, anderseits für das innerhalb der Trennkammer nicht zu Boden sinkende Gut an der Ausströmseite zwei oder mehrere Sammelkammern angeordnet werden. Mit dieser Anordnung ist es möglich, sowohl grobe Kornfraktionen als auch feine Kornfraktionen in einem einzigen Trennvorgang aufzutrennen. Am Boden der Trennkammer sind mindestens zwei durch Trennkanten voneinander getrennte Aufgangkammern angeordnet. In der erfindungsgemäßen Vorrichtung ruht die Trennflüssigkeit in den am Boden befindlichen und durch Trennkanten voneinander getrennten Auffangkammern weitgehend. Das in der Auffangkammer gesammelte Probengut sinkt zu Boden und über eine speziell ausgebildete Schleuse mit Absperreinrichtung chargenweise auf je eine Wägeeinrichtung.

In der Wägeeinrichtung wird die Kornfraktion in der ruhenden Trennflüssigkeit mengenmäßig durch Wägung bestimmt. Eine besonders vorteilhafte Ausführung einer derartigen Wägeeinrichtung besteht aus einem becherförmigen Wägegefäß auf einer Flachfeder, die am anderen Ende in eine spezielle Halterung eingespannt ist. Diese Halterung ist um eine zu der Feder parallele Achse drehbar, so daß nach Durchführung der Wägung das Probengut durch Schwenken ausgeleert werden kann und nach Zurückschwenken in die Wägeposition wieder die Wägebereitschaft hergestellt ist. Die Wägeeinrichtungen für sämtliche Auffangkammern können sowohl in einem gemeinsamen als auch in getrennten mit Trennflüssigkeit gefüllten Wägekammern untergebracht werden. Auf zum Beispiel induktivem Wege kann die Auslenkung der Blattfeder und damit das Gewicht der entsprechenden Kornfraktion gemessen werden. Diese Wägevorrichtung bietet neben der überraschenden prinzipiellen Einfachheit der Methode den Vorteil die bei optischen Bestimmungsmethoden bei großen Korngrößen auftretenden Fehler zu vermeiden. Diese Fehler werden insbesondere dadurch verursacht, daß auch innerhalb der einzelnen Fraktionen bei großen Korngrößen die Sinkgeschwindigkeiten stark unterschiedlich sind und daß Körner während der Messungen sich gegenseitig optisch überlagern.

Die in der Trennkammer nicht zu Boden sinkenden und in den Sammelkammern gesammelten Fraktionen mit kleiner Korngröße werden nach an sich bekannten Methoden auf optischem Weg bestimmt.

Um die für Mischvorgänge bei der Herstellung von Beton, insbesondere für die Fertigung von Fertigteilen, erforderliche hohe Analysengeschwindigkeit zu erzielen, verfügt eine besonders günstige Ausführung der erfindunsgemäßen Vorrichtung über eine weitgehende Vollautomatisierung sowohl der Probenaufbringung, der Auftrennung der Fraktionen, der Mengenbestimmung und der Berechnung der Unterschiede zwischen Ist- und Sollwerten der Kornverteilung. Dies wird durch eine elektronische Steuerung mittels eines oder mehrerer Mikroprozessoren realisiert. Auf diese Weise wird eine so rasche Durchführung der Analyse ermöglicht, daß während der Zeit in der eine Betoncharge gemischt wird, die Korngrößenverteilungen für die Zuschlagstoffe der nächsten Charge ermittelt werden, so daß durch eine Berechnung der erforderlichen Mengen der einzelnen Betonkomponenten eine gleichbleibende Einhaltung der Betonspezifikation gewährleistet werden kann.

Im folgenden wird ein Ausführungsbeispiel der Erfindung an Hand der Zeichnungen näher erläutert. Es zeigt Fig. 1 eine schematische Darstellung der Trennkammer, Fig. 2 einen Schnitt durch die Trennkammer, Fig. 3a und 3b zwei unterschiedliche Ausführungsformen der Probenzulaufeinrichtung und Fig. 4 den schematischen Aufbau der Wägeeinrichtung, während Fig. 5 die geometrische Auftrennung von Betonsanden zeigt.

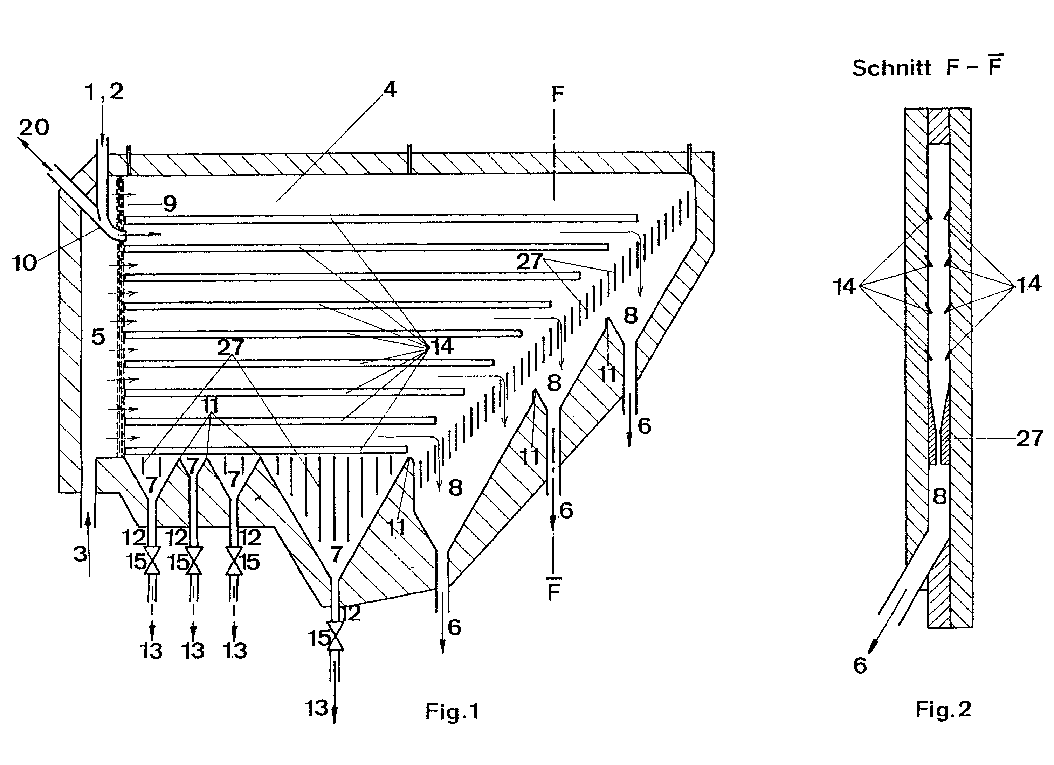

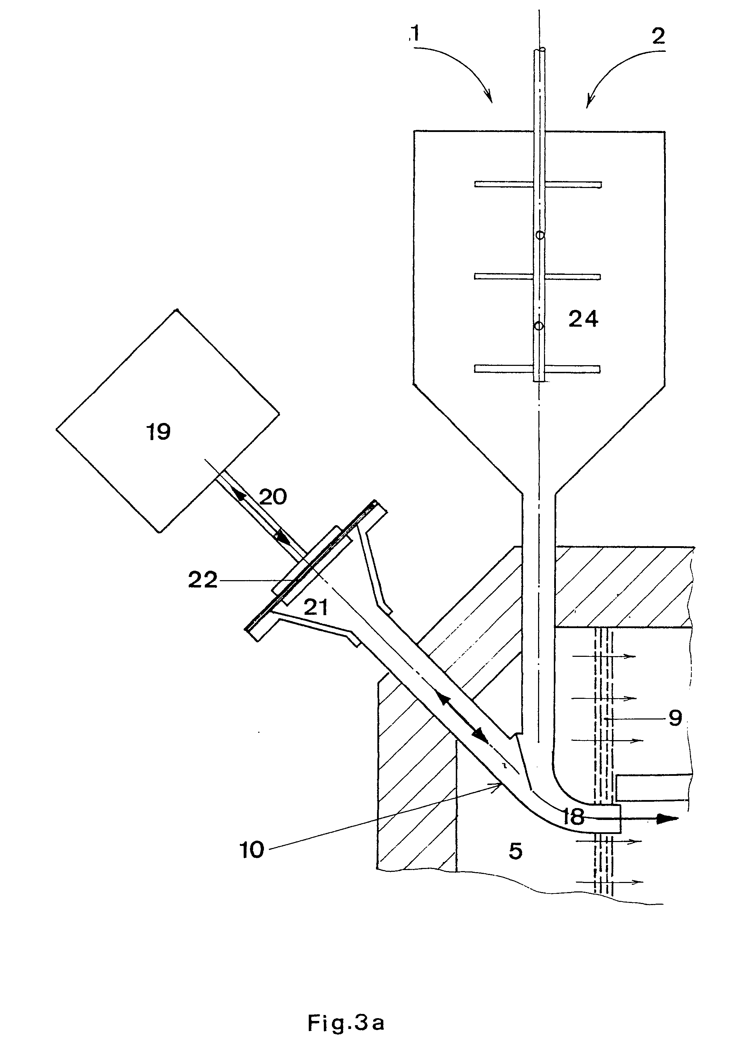

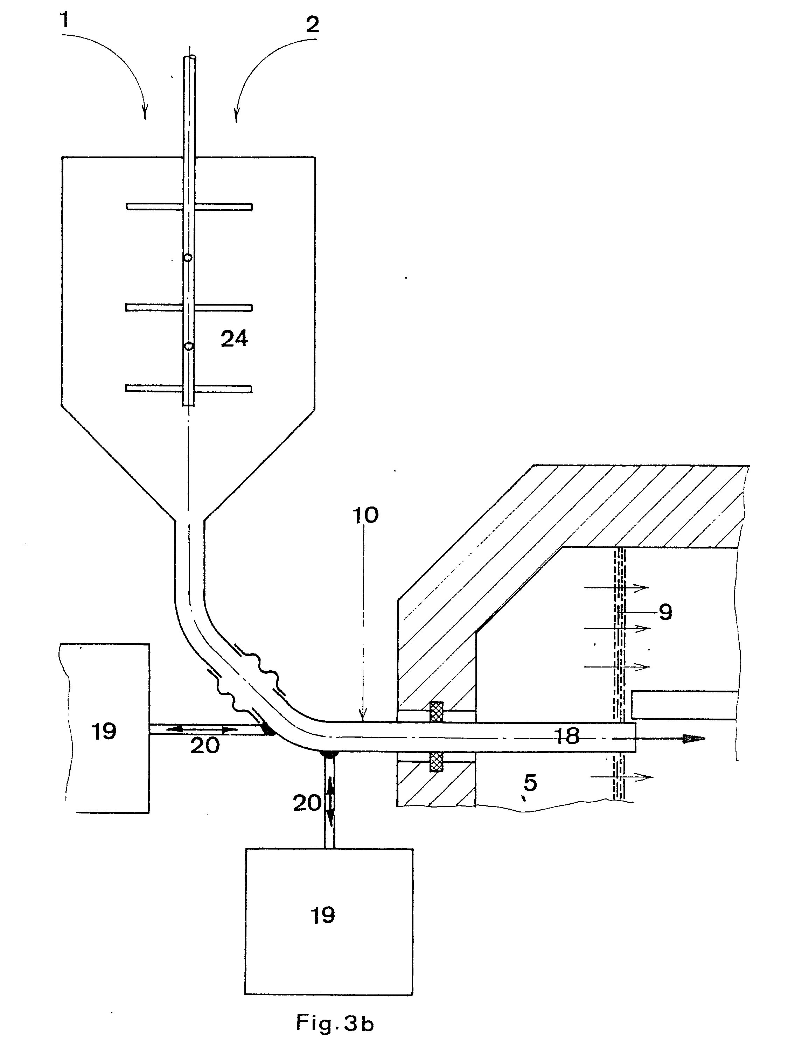

Die in Fig. 1 dargestellte Trennkammer ist ca. 30 cm lang und 25 cm hoch, bei einer Breite von ca. 2 cm. Die Wasserzufuhr (3) erfolgt über die vorgeschaltete, zylindrische Einlaufkammer (5), welche mit der Trennkammer (4) über eine Laminarisiereinrichtung (9), durch mehrere hintereinander geschaltete Gitter gebildet, verbunden ist. Die Laminarisiereinrichtung wirkt als Drossel und gewährleistet eine gleichgeschwindige Verteilung der einströmenden Wassermenge über die gesamte Höhe der Trennkammer. Das für laminare Strömungen charakteristische Strömungsgeschwindigkeitsprofil, bei einer durch zwei parallele Platten gebildeten Kammer eine Dreiecksverteilung, stellt sich erst in sehr langen Gefäßen allmählich ein. Bei den vorliegenden Dimensionen und Strömungsgeschwindigkeiten kommt es nicht zur Ausbildung dieses Strömungsprofiles. Der Ausgang der Trennkammern wird durch fächermäßig senkrecht zur Strömung entlang einer Schrägen angeordneten Lamellen (27), die ebenso wie die Führungsleisten (14) zur Aufrechterhaltung der gleichgeschwindigen, weitgehend laminaren Strömung dienen, gebildet. Die Trennflüssigkeit strömt über die Sammelkammern (8) ab. Das Probegut (1) wird mit Wasser (2) in einem Vormischer (24) durch Rühren vermischt. Das so vorgemischte Probe-Trägerflüssigkeit-Gemisch wird mittels direkt auf die Flüssigkeit aufgeprägter Schwingungen im Einströmrohr (18) innig vermischt. Die detaillierte Anordung der Probenaufbereitungsvorrichtung ist in Fig. 3a bzw. Fig. 3b ersichtlich. In Fig. 3a wird das durch Rühren in einer Vormischeinrichtung vorgemischte Probe-Flüssigkeit-Gemisch durch die im Einströmrohr (20) schwingende Trägerflüssigkeit zusätzlich vermengt. Die direkte Aufprägung der Schwingung auf die Trägerflüssigkeit erfolgt indem eine auf induktiven Weg (19) erzeugte mechanische, lineare Schwingung über die Membran (22) im Pulsationsgefäß (21) auf die Trägerflüssigkeit übertragen wird. Diese wirkt auf das in das Einströmrohr herabsinkende vorgemischte Probe-Trägerflüssigkeit-Gemisch. In Fig. 3b wird eine andere Ausführungsform gezeigt, bei welcher die auf induktivem Weg (19) erzeugten mechanischen linearen Schwingungen über eine starre mechanische Verbindung (20) auf das Einströmrohr (18), welches gummielastisch, dicht mit der Wandung der Trennkammern verbunden ist, aufgebracht werden. Die in der Vormischvorrichtung (24), die elastisch mit dem Einströmrohr (18) verbunden ist, vorgemischte Probe-Trägerflüssigkeitsmischung, sinkt in das Einströmrohr, wird dort durch die Einwirkung der Schwingungen innigst vermischt und anschließend über das Einströmrohr gleichgeschwindig in die laminar strömende Trennflüssigkeit eingebracht. Die Schwingungen können in Richtung und Amplitude verändert werden, um die optimale Schwingungsart herzustellen, bei der keine störenden Turbulenzen im Aufgabebereich auftreten und keine Ablagerungen von Sanden im Einströmrohr auftreten.

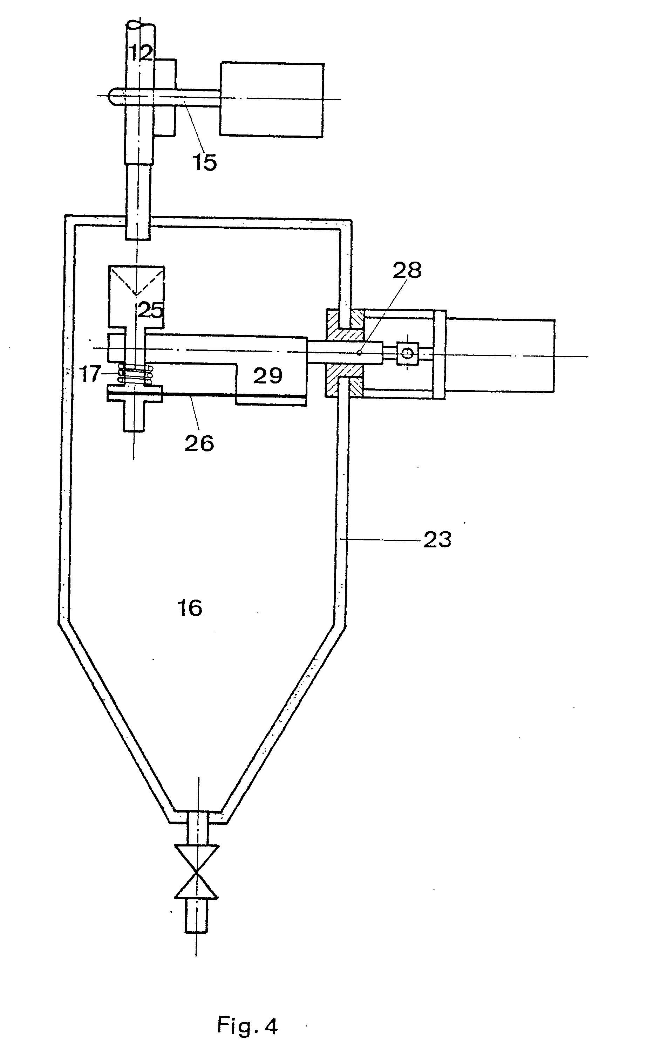

Der Boden der Trennkammern wird durch keilförmige Vertiefungen, Auffangkammern (7), gebildet, deren Ableitungsrohre als Schleusen (12) jeweils in einer mit der Trennwand über eine Absperreinrichtung (15) fix verbundenen weiteren Kammer münden. Diese Kammer ist mit ruhender Trennflüssigkeit gefüllt. Wie Fig. 4 zeigt, befindet sich in diesen mit Trennflüssigkeit gefüllten Kammern, den Wägekammern (16) ein auf eine Federwaage (26) montierter Wägebehälter (16) ein auf eine Federwaage (26) montierter Wägebehälter (25). Mittels eines speziellen Halterung (29) kann die gesamte Wägeeinrichtung um die Achse (28) zum Entleeren nach der Wägung gedreht werden. Die durch das Gewicht der jeweiligen Fraktion bedingte Auslenkung der Federwaage wird mittels eines induktiven Sensors (17) bestimmt. An der Ausströmseite sind 3 Sammelkammern angeordnet, die ebenso wie die Auffangkammern durch Lamellen (27) abgeschirmt sind. Über diese Sammelkammern läuft die Trennflüssigkeit in die für die optische Mengenbestimmung vorgesehenen Meßeinrichtungen. In Fig. 2, die einen Schnitt durch die Trennkammern zeigt, sind deutlich die Führungsleisten (14) ebenso wie die Lamellen (27) und eine Sammelkammer (8) zu erkennen.

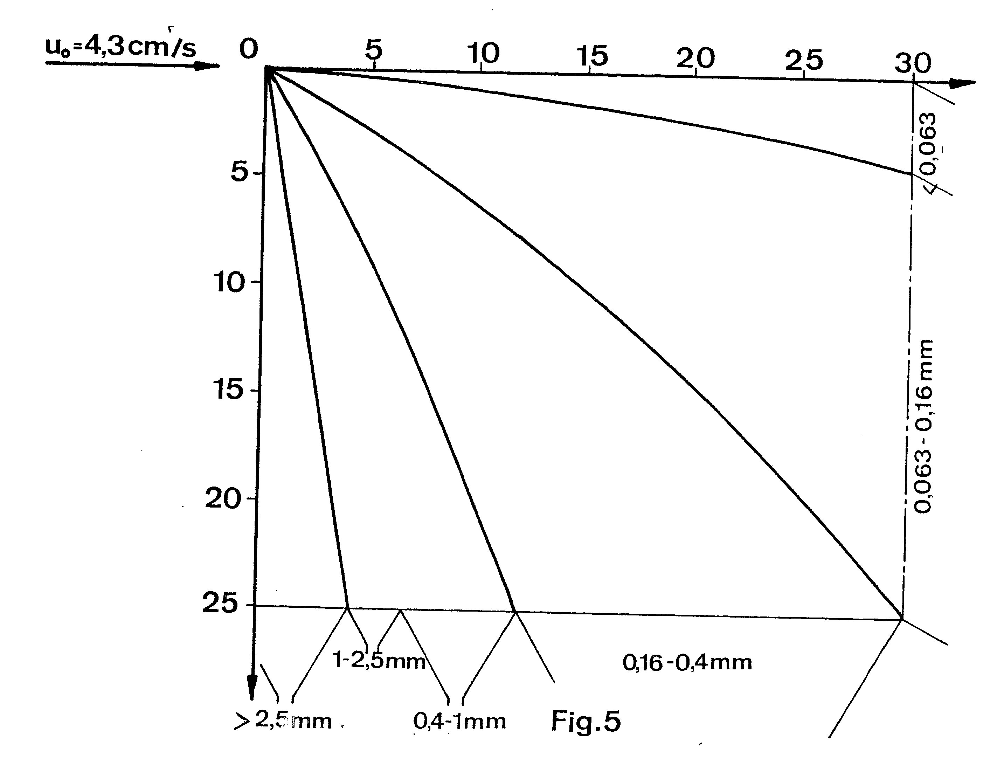

in Fig. 5 ist beispielsweise die geometrische Auftrennung von Betonsanden in der beschriebenen Trennkammer für eine Strömungsgeschwindigkeit von 4,3 cm/sec gezeigt.

## Ansprüche

1. Verfahren zum Bestimmen der Kornverteilung in Korngemischen (1), bei welchem diese in einer Trennkammer (4) in die Strömung einer Trennflüssigkeit (3) eingebracht, mit dieser durch ein Kraftfeld, dessen Kraftlinien mit den Stromlinien der Trennflüssigkeit (3) Winkel einschließen, transportiert und je nach ihren Fallgeschwindigkeiten in eine Anzahl von Fraktionen aufgeteilt und aufgefangen werden, wobei eine repräsentative Probe des Korngemisches (1) mit einer Trägerflüssigkeit (2) innig vermengt und in der Nähe der Eintrittsstelle der Trennflüssigkeit (3) in die Trennkammer (4) in die Trennflüssigkeit (3) — nach Richtung und Größe der Strömungsgeschwindigkeit mit der Trennflüssigkeit (3) zumindestens weitgehend übereinstimmend — eingebracht wird, dadurch gekennzeichnet, daß die Auftrennung in die unterscheidlichen Kornfraktionen unter Einwirkung der Schwerkraft in jenem Bereich der Trennkammer (4) erfolgt, in welchem die Trennflüssigkeit (3) laminar gleichgeswinding strömt und, daß die an sich bekannte gleichgeschwindige Einbringung des Gemenges aus Probe und Trägerflüssigkeit (2) turbulenzfrei im oberen Bereich einer weitgehend gleichgeschwindig laminar strömenden Trennflüssigkeit (3) erfolgt.

2. Verfahren nach Anspruch 1, dadurch gekennzeichnet, daß die innerhalb der Trennkammer (4) zu Boden sinkende(n) Kornfraktion(en) mit größerem Korn innerhalb der Trennkammer (4) in Auffangkammern (7) gesammelt und daß die Kornfraktion(en) mit kleinerem Korn mit der Trennflüssigkeit (3) über die Sammelkammer(n) (8) aus der Trennkammer (4) ausgetragen wird und daß die Bestimmung der innerhalb der Trennkammer (4) gesammelten Kornfraktion(en) und die aus der Trennkammer (4) ausgetragene Kornfraktion(en) nach verschiedenen Methoden erfolgt.

3. Verfahren nach einem der Ansprüche 1 oder 2, dadurch gekennzeichnet, daß die Zu- und Abfuhr der innerhalb der Trennkammer (4) gesammelten Kornfraktion(en) in das bzw. die Wägegefäße (25) sowie die Wägung selbst in der ruhenden, die jeweilige Auffandkammer (7) und die Wägekammer (16) füllende Trennflüssigkeit (3) vorgenommen wird.

4. Verfahren nach einem der Ansprüche 1 bis 3, dadurch gekennzeichnet, daß das einzubringende Gemenge aus Korngemisch (1) und Trägerflüssigkeit (2) durch dem Gemenge aufgeprägte Schwingungen innig vermischt wird.

5. Verfahren nach einem der Ansprüche 1 bis 4, dadurch gekennzeichnet, daß dem einzubringenden Gemenge aus Korngemisch (1) und Trägerflüssigkeit (2) mindestens eine ein- oder mehrdimensionale Schwingung aufgeprägt wird, wobei bei der Aufprägung mehrerer Schwingungen diese zueinander jeweils einen Winkel einschliessende Schwingungsrichtungen und/oder unterschiedliche Phasen und/oder unterschiedliche Frequenzen aufweisen.

6. Vorrichtung zum Bestimmen der Kornverteilung in Korngemischen zur Durchführung des Verfahrens nach einem der Ansprüche 1 bis 5, mit einer seitlich von zwei parallelen oder in Strömungsrichtung divergierenden Wänden begrenzten trogförmigen Trennkammer (4) mit einem an den gegenüberliegenden Enden der Trennkammer (4) angeordneten Ein- und Auslauf für die Trennflüssigkeit (3) und mit einer Einrichtung zum Einbringen des Probengutes Zusammen mit einer Trägerflüssigkeit (2) am einlaufseitigen Ende der Trennkammer (4), wobei die im wesentlichen horizontale Strömungsrichtung der Trennflüssigkeit (3) mit der Schwerkraft einen Winkel einschließt, dadurch gekennzeichnet, daß an der einlaufseitigen Schmalseite der Trennkammer (4) eine von deren Boden ausgehende, dem Trennflüssigkeitseinlauf (3) zugehörige, über die ganze Höhe der Trennkammer (4) reichende Einlaufkammer (5), die mit der Trennkammer (4) über eine Laminarisierungseinrichtung (9) kommuniziert, angeordnet ist und daß im oberen Bereich der Trennkammer (4) ein in die Laminarisierungseinrichtung (9) integriertes, unmittelbar nach dieser in die Trennkammer (4) einmündendes und parallel zur Strömung der Trennflüssigkeit orientiertes Einströmrohr (18), dessen Verbindung mit der Probenaufbereitungsvorrichtung durch die Einlaufkammer verlauft, angeordnet ist mittels dessen ein turbulenzfreies und mit der Trennflüssigkeit weitgehend gleichgeschwindiges Einbringen des mit der Trägerflüssigkeit (2) innig vermengten Probengutes erfolgt und daß an der Auslaufseite der Trennkammer (4), im wesentlichen über deren gesamte Höhe, zumindest zwei, von der übrigen Trennkammer durch in Strömungsrichtung orientierte Lamellen (27) und voneinander jeweils durch Trennkanten (11) getrennte, Sammelkammern (8), über welche die gesamte Trennflüssigkeit (3) aus der Trennkammer (4) strömt, angeordnet sind und daß am Boden der Trennkammer (4), wenigstens eine, von der übrigen Trennkammer durch Lamellen (27) getrennte, Auffangkammer (7), für eine innerhalb der Trennkammer abgesunkene Kornfraktion, angeordnet ist.

7. Vorrichtung nach Anspruch 6, dadurch gekennzeichnet, daß jede Auffangkammer (7) über eine Schleuse (12) mit einer für alle oder einer Vielzahl von Auffangkammer(n) gemeinsamen oder mit je einer das Wägen der jeweiligen Fraktion in der Trennflüssigkeit ermöglichen den Wägeeinrichtung (13) verbunden ist und daß an den jeweiligen Auslauf (6) der Sammelkammern (8) je eine Vorrichtung für die optische Mengenbestimmung angeschlossen ist.

8. Vorrichtung nach einem der Ansprüche 6 oder 7, dadurch gekennzeichnet, daß an den Seitenwänden der Trennkammer (4) horizontale, voneinander distanzierte, im wesentlichen über die gesamte Länge der Trennkammer reichende, 5 bis 30 % der Breite der Trennkammer in diese hineinragende, Führungsleisten (14) angeordnet sind.

9. Vorrichtung nach einem der Ansprüche 6 bis 8, dadurch gekennzeichnet, daß die Führungsleisten (14) zumindest an ihrer Oberseite, von einer Schrägfläche begrenzt oder als ebene Lamellen ausgebildet sind, und daß deren obere Fläche mit der Seitenwand der Trennkammer einen stumpfen Winkel einschließt.

10. Vorrichtung nach einem der Ansprüche 6 bis 9, dadurch gekennzeichnet, daß an der Unterseite der Trennkammer mindestens zwei, im wesentlichen durch eine in horizontaler Ebene liegende Trennkante (11) voneinander getrennte Auffangkammern (7) angeordnet sind und 'daß jede dieser Auffangkammer über eine Absperreinrichtung (15) mit einer für alle oder jeweils mehrere Auffangkammer gemeinsamen oder mit je einer mit Trennflüssigkeit gefüllten Wägekammer (16) verbunden ist, in der mindestens eine Wägevorrichtung untergebracht ist und daß die Trennflüssigkeit in der Wägekammer ruht.

11. Vorrichtung nach einem der Ansprüche 6 bis 10, dadurch gekennzeichnet, daß die Wägeeinrichtung ein Wägegefäß (25) aufweist, welches an dem einen Ende einer Flachfeder (26) angebracht ist, deren anderes Ende in einen in der Gefäßwand (23) um eine zu der Feder parallele Achse (28) drehbar gelargerten Halter (29) eingespannt ist.

12. Vorrichtung nach einem der Ansprüche 6 bis 11, dadurch gekennzeichnet, daß die Flachfeder (26) mit einer Spule (17) als Sensor versehen ist, welcher mit einer an sich bekannten elektrischen Meß- und Registriereinrichtung verbunden ist.

13. Vorrichtung nach einem der Ansprüche 6 bis 12, dadurch gekennzeichnet, daß die Probenzulaufeinrichtung (10) aus einem mit einer Kornmischeinrichtung (24) verbundenen, beweglich gelargerten und gegen die die Trennkammer abgedichteten, in Richtung der gleichgeschwindig laminar strömenden Trennflüssigkeit orientierten Einströmrohr (18) gebildet ist, welches mit mindestens einer Einrichtung (19) zur Erzeugung von ein-oder mehrdimensionalen Schwingungen, beispielsweise einer Induktionsspule, mittels Schwingungsüberträgern (20) verbunden ist.

14. Vorrichtung nach einem der Ansprüche 6 bis 13, dadurch gekennzeichnet, daß die Probenzulaufeinrichtung (10) aus einem mit einer Kornmischeinrichtung (24) verbundenen in Richtung der gleichgeschwindig strömenden Trennflüssigkeit orientierten Einströmrohre (18) gebildet ist und daß über eine Pulsationseinrichtung, welche aus einem mit dem Einströmrohr verbundenen Pulsationsgefäß (21), Schwingungsüberträger (20, 22) und mindestens einer Einrichtung (19) zur Erzeugung von ein- oder mehrdimensionalen Schwingungen, beispielsweise einer Induktionsspulse, besteht, Schwingungen auf das Gemenge von Trägerflüssigkeit und Probengut direkt augeprägt werden.

15. Vorrichtung nach einem der Ansprüche 6 bis 14, dadurch gekennzeichnet, daß das Einströmrohr (18) mit einer Vormischeinrichtung (24), vorzugsweise Rühreinrichtung, in welche das Probengut und die Trägerflüssigkeit eingebracht werden, gegebenenfalls flexibel, verbunden ist.

16. Vorrichtung nach einem der Ansprüche 6 bis 15, dadurch gekennzeichnet, daß der freie Querschnitt des Einströmrohres (18) höchstens gleich dem von Einbauten freien Querschnitt der Trennkammer ist.

17. Vorrichtung nach einem der Ansprüche 6 bis 16, dadurch gekennzeichnet, daß in den Auffangkammern (7) und in den Sammelkammern (8) Lamellen (27), im wesentlichen senkrecht zur Strömungsrichtung orientiert, angeordnet sind.

18. Vorrichtung nach einem der Ansprüche 6 bis 17, dadurch gekennzeichnet, daß die Probenzuführung, die Zufuhr und Abfuhr des Wägegutes in die Wägeeinrichtung, der Wägevorgang, die optische Mengenbestimmung, sämtliche Kalibrierungsvorgänge sowie die Ausgabe der Meßdaten durch eine automatische Steuereinrichtung, beispielsweise durch mindestens einen Mikroprozessor, gesteuert werden.

19. Vorrichtung nach einem der Ansprüche 6 bis 18, dadurch gekennzeichnet, daß aus der ermittelten Kornverteilung in aufeinanderfolgenden Chargen von Betonsand, mit einer Körnung bis zu 5 mm, die Abweichung der Ist-Werte von den Soll-Werten der Kornzusammensetzung für den Herstellungsprozeß von Beton, beispielsweise für die Herstellung von Betonfertigteilen, ermittelt wird und daß durch entsprechende laufende Anpassung der Zufuhr der einzelnen Betonkomponenten die Einhaltung der spezifizierten Betongüte eingehalten wird.

**Claims**

1. A method for determining the grain size distribution of granular aggregates (1), in which said granular aggregates are introduced into the flow stream of a liquid separating medium (3) in a separating chamber (4), carried in the flow stream through a field of force, whose lines of force form angles with the flow lines of the liquid separating medium (3), and segregated according to their rates of descent into a number of fractions that are collected, with a representative sample of the granular aggregate (1), thoroughly intermixed with a liquid carrier medium (2) — its direction and rate of flow corresponding at least largely to that of the liquid separating medium — being introduced into the liquid separating medium (3) near the point of entry into the separating chamber (4) of the liquid separating medium (3), wherein the segregation into the different grain fractions takes place under the effect of gravity in that section of the separating chamber (4) in which the liquid separating medium (3) moves in a uniformly laminar flow, and wherein the previously known introduction of the sample intermixed with the liquid carrier medium (2) and moving at the same rate of flow is effected without creation of turbulence in the upper part of a liquid separating medium (3) moving largely in a uniformly laminar flow.

2. A method as claimed in Claim 1, wherein the grain fraction(s) comprising the larger grains descending to the bottom of the separating chamber (4) are collected in settling tanks (7) inside the separating chamber (4) and the grain fraction(s) comprising the smaller grains leave the separating chamber (4) together with the liquid separating medium (3) via the collecting tank(s) (8) ; and wherein the grain fraction(s) collected inside the separating chamber (4) and the grain fraction(s) leaving the separating chamber (4) are determined according to different methods.

3. A method as claimed in either of Claims 1 and 2, wherein the grain fraction(s) collected inside the separating chamber (4) is (are) fed into and discharged from the weighing vessel(s) (25) and weighed in the still liquid separating medium (3) filling the respective settling tank (7) and the weighing chamber (16).

4. A method as claimed in any of Claims 1-3, wherein the mixture consisting of the granular aggregate (1) and the liquid carrier medium (2) is thoroughly intermixed by oscillations impressed directly upon the mixture.

5. A method as claimed in any of Claims 1-4, wherein at least one one-dimensional or multi-dimensional oscillation is impressed directly upon the mixture consisting of the granular aggregate (1) and the liquid carrier medium (2), with the directions of oscillation in case of several oscillations being impressed upon the mixture forming angles with each other and/or the oscillations having different phases and/or different frequencies.

6. An apparatus for the determination of the grain size distribution of granular aggregates for application of the method as claimed in any of Claims 1-5, with a through-shaped chamber (4) bounded laterally by two walls parallel to each other or divergent in the direction of flow, with inlet and outlet ports for the liquid separating medium (3) at the opposite ends of the separating chamber (4) and with a device for the introduction of the sample together with a liquid carrier medium (2) at the inlet side of the separating chamber (4), with the substantially horizontal direction of flow of the liquid separating medium (3) forming an angle with the force of gravity, wherein an inlet chamber (5) rising from the bottom of the separating chamber (4), which forms part of the liquid separating medium inlet unit and extends over the total height of the separating chamber (4) and which communicates with the separating chamber (4) by means of a laminarization device, is fitted at the narrow inlet side of the separating chamber (4) ; and wherein an inflow pipe (18) is fitted in the upper section of the separating chamber (4), which is integrated into the laminarization device and enters the separating chamber (4) immediatly after the laminarization device with its orientation parallel to the flow of the liquid separating medium and whose connection to the sample preparation device passes through the inlet chamber, by means of which turbulence-free introduction of the sample, throughly intermixed with the liquid carrier medium (2), at a flow rate largely equal to that of the liquid separating medium is ensured ; and wherein at least two collecting tanks (8), extending substantially over the total height of the separating chamber (4), separated from the rest of the separating chamber by lamellas (27) oriented in the direction of flow and from each other by separating chamber, through which passes the entire liquid separating edges (11), are fitted at the outlet side of the separating chamber, through which passes the entire liquid separating medium from the separating chamber ; and wherein at least one settling tank (7), separated from the rest of the separating chamber by lamellas (27), for the grain fraction descending inside the separating chamber is fitted at the botton of the separating chamber (4).

7. An apparatus as claimed in Claim 6, wherein each settling tank (7) is connected via a gate (12) either to a weighing device (13) serving all or a plurality of settling tanks or to one weighing device (13) each for the weighing of the corresponding grain fraction in the liquid separating medium ; and wherein a unit for optical quantity determination is connected to each outlet (6) of a collecting tank (8).

8. An apparatus as claimed in either of Claims 6 and 7, wherein spaced, horizontal guide bars (14), extending substantially over the total length of the separating chamber and projecting into the separating chamber over 5-30 % of its width, are fitted at the side walls of the separating chamber (4).

9. An apparatus as claimed in any of Claims 6-8, wherein the guide bars (14), at least on their upper sides, are bounded by inclined surfaces or designed as plane lamellas, with their upper surfaces forming an obtuse angle with the side wall of the separating chamber.

10. An apparatus as claimed in any of Claims 6-9, wherein at least two settling tanks (7), separated substantially by a horizontal separating edge (11), are fitted at the bottom of the separating chamber and each of these settling tanks is connected via a shut-off device (15) either to a weighing chamber (16) serving all or several of the settling tanks or to one weighing chamber (16) each, the said weighing chambers being filled with liquid separating medium and accomodating at least one weighing device and the liquid separating medium in the weighing chamber being not in flow.

11. An apparatus as claimed in any of Claims 6-10, wherein the weighing device is equipped with a weighing basin (25) fitted at one end of a leaf spring (26), whose other end is held by a fastening device (29) supported in the chamber wall (23) and rotatable around an axis (28) parallel to the spring.

12. An apparatus as claimed in any of Claims 6-11, wherein the leaf spring (26) is equipped with a coil (17) serving as a sensor which is connected to a previously known electric measuring and recording unit.

13. An apparatus as claimed in any of Claims 6-12, wherein the sample inlet unit (10) consists of a movably supported inflow pipe (18), connected to a grain mixing unit (24), sealed against the separating chamber and oriented in the direction of the uniformly laminar flow of the liquid separating medium, which is connected to at least one device (19) for the generation of one- or multi-dimensional oscillations, e.g. an induction coil, by means of oscillation transmitters (20).

14. An apparatus as claimed in any of Claims 6-13, wherein the sample inlet unit (10) consists of an inflow pipe (18) connected to a grain mixing unit (24) and oriented in the direction of the uniformly flowing liquid separating medium and wherein oscillations are impressed directly upon the mixture of the liquid carrier medium and the sample by means of a pulsation unit consisting of a pulsation vessel (21) connected to the inflow pipe, oscillation transmitters (20, 22) and at least one device (19) for the generation of one- or multi-dimensional oscillations, e. g. an induction coil.

15. An apparatus as claimed in any of Claims 6-14, wherein the inflow pipe (18) is connected — flexibly, if necessary — to a pre-mixing device (24), preferably a stirring device, into which the sample and the liquid carrier medium are introduced.

16. An apparatus as claimed in any of Claims 6-15, wherein the free cross section of the inflow pipe (18) is not larger than the cross section of the separating chamber in areas free from built-in units.

17. An apparatus as claimed in any of Claims 6-16, wherein lamellas (27), oriented substantially vertically to the direction of flow, are fitted in the settling tanks (7) and in the collecting tanks (8).

18. An apparatus as claimed in any of Claims 6-17, wherein the sample feed, the feeding of the material to be weighed to and its discharge from the weighing device, the weighing operation, the optical quantity determination, all calibrating operations as well as the output of the measuring results are controlled by an automatic control unit, e.g. at least one micro-processor.

19. An apparatus as claimed in any of Claims 6-18, wherein, on the basis of the determined grain size distribution of subsequent batches of concrete sand with grain sizes of up to 5 mm, the deviation of the actual values from the nominal grain size distribution ideally required for the production of concrete, e.g. for pre-cast concrete members, is determined and the maintenance of the specified concrete quality is ensured through continuous adjustment of the feed of the individual concrete ingredients.

**Revendications**

1. Procédé pour déterminer la granulométrie d'agrégats (1), selon lequel lesdits agrégats sont introduits, dans une chambre séparatrice (4), dans le courant d'un liquide de séparation (3), sont transportés avec celui-ci à travers un champ de forces dont les lignes de force forment un angle avec les lignes d'écoulement du liquide de séparation (3), sont répartis, suivant leur vitesse de chute, en un certain nombre de fractions et sont recueillis, un échantillon représentatif de l'agrégat (1) étant mélangé intimement avec un liquide véhicule (2) et introduit dans le liquide de séparation (3), dans la chambre séparatrice (4), à proximité du point d'entrée du liquide de séparation (3) — selon une direction et à une vitesse d'écoulement correspondant au moins largement à celles du liquide de séparation (3), caractérisé en ce que la séparation en différentes fractions granulométriques se fait sous l'effet de la gravité dans la zone de la chambre séparatrice (4) dans laquelle le liquide de séparation (3) s'écoule au régime laminaire à une vitesse uniforme, et en ce que l'introduction à vitesse égale, connue en soi, du mélange constitué par l'échantillon et le liquide véhicule (2) se fait sans turbulence dans la zone supérieure d'un liquide de séparation (3) s'écoulant au régime laminaire à une vitesse sensiblement uniforme.

2. Procédé selon la revendication 1, caractérisé en ce que la (les) fraction(s) de plus gros calibre qui tombent vers le fond dans la chambre séparatrice (4) est (sont) recueillie(s) dans la chambre séparatrice (4) dans des compartiments récepteurs (7) et la (les) fraction(s) de plus petit calibre est (sont) entraîné(e)s avec le liquide de séparation (3) à travers les compartiments collecteurs (8) hors de la chambre séparatrice (4) et que la détermination de la (des) fraction(s) granulométrique(s) recueillie(s) à l'intérieur de la chambre séparatrice (4) et celle de la (des) fraction(s) granulométrique(s) évacuée(s) de la chambre séparatrice (4) sont effectuées selon différentes méthodes.

3. Procédé selon une des revendications 1 ou 2, caractérisé en ce que l'introduction de la (des) fraction(s) granulométrique(s), recueillie(s) à l'intérieur de la chambre, dans le (les) vase(s) de pesée (25), leur évacuation et la pesée, sont effectuées dans le liquide de séparation (3) immobile remplissant le compartiment récepteur (7) correspondant et la chambre de pesée (16).

4. Procédé selon une des revendications 1 à 3, caractérisé en ce que le mélange de l'agrégat (1) et du liquide véhicule (2) devant être introduit, est mélangé intimement par les oscillations qui lui sont imprimées.

5. Procédé selon une des revendications 1 à 4, caractérisé en ce que au moins une oscillation mono- ou pluridimensionnelle est imprimée au mélange de l'agrégat (1) et du liquide véhicule (2) à introduire et que, si plusieurs oscillations sont imprimées au mélange, celles-ci présentent des directions d'oscillations faisant un angle entre elles et/ou des phases différentes et/ou des fréquences différentes.

6. Dispositif pour déterminer la granulométrie d'agrégats permettant la matérialisation du procédé selon une des revendications 1 à 5, avec une chambre séparatrice (4) en forme d'auge, délimitée latéralement par deux parois parallèles ou divergentes dans le sens de l'écoulement, avec arrivée et sortie du liquide de séparation (3) aux extrémités opposées de la chambre séparatrice (4) côté entrée, le sens de l'écoulement du liquide de séparation (3) essentiellement horizontal formant un angle avec la force de gravité caractérisé en ce qu'une chambre d'entrée (5) partant du fond et occupant toute la hauteur de la chambre séparatrice (4), correspondant avec l'entrée du liquide de séparation (3) et communiquant avec la chambre séparatrice (4) par un dispositif de laminarisation (9) est disposée sur la petite face, côté entrée, de la chambre séparatrice (4) et que l'on a, dans le haut de la chambre séparatrice (4) une tubulure d'admission (18) intégrée au dispositif de laminarisation (9), débouchant immédiatement après celle-ci dans la chambre séparatrice (4), orientée parallèlement à l'écoulement du liquide de séparation et dont la liaison avec le dispositif de préparation de l'échantillon passe par la chambre d'entrée, au moyen de laquelle l'échantillon intimement mélangé avec le liquide véhicule (2) peut être introduit sans turbulence et sensiblement à la même vitesse que le liquide de séparation et que l'on a, du côté sortie de la chambre séparatrice (4), essentiellement sur toute la hauteur de celle-ci, au moins deux compartiments collecteurs (8), séparés du reste de la chambre séparatrice par des lamelles (27) orientées dans le sens de l'écoulement et séparés les uns des autres par des arêtes (11), par lesquels la totalité du liquide de séparation (3) s'écoule de la chambre séparatrice (4) et que l'on a, au fond de la chambre séparatrice (4), au moins un compartiment récepteur (7) séparé du reste de la chambre séparatrice par des lamelles (27), pour une fraction granulométrique tombée au fond de la chambre séparatrice.

7. Dispositif selon la revendication 6, caractérisé en ce que chacun des compartiments récepteurs (7) est relié par un sas (12) à un dispositif de pesée (13) commun à tous les compartiments récepteurs ou à plusieurs d'entre eux ou aux dispositifs de pesée (13) correspondant à chacun des compartiments et permettant de peser la fraction considérée dans le liquide de séparation et en ce que chacun des orifices d'écoulement (6) des compartiments collecteurs (8) est relié à un dispositif de détermination quantitative optique.

8. Dispositif selon une des revendications 6 ou 7, caractérisé en ce que des lames de guidage (14) horizontales, distancées les unes des autres, occupant essentiellement toute la longueur de la chambre séparatrice et faisant saillie sur 5 à 30 % de la largeur de celle-ci, sont disposées sur les parois latérales de la chambre séparatrice (4).

9. Dispositif selon une des revendications 6 à 8, caractérisé en ce que les lames de guidage (14) sont délimitées au moins vers le haut par une surface inclinée ou sont des lamelles planes et que leur face supérieure forme avec la paroi latérale de la chambre séparatrice un angle obtus.

10. Dispositif selon une des revendications 6 à 9, caractérisé en ce que l'on a au bas de la chambre séparatrice au moins deux compartiments récepteurs (7) séparés l'un de l'autre essentiellement par une arête séparatrice (11) située dans le plan horizontal et que chacun de ces compartiments séparateurs est relié par un dispositif d'arrêt (15) soit à une chambre de pesée (16) commune à tous les compartiments séparateurs ou à plusieurs d'entre eux, soit à une chambre de pesée (16) pour chaque compartiment séparateur, ces chambres de pesée étant remplies de liquide de séparation et comportant au moins un dispositif de pesée, et en ce que le liquide de séparation est immobile dans la chambre de pesée.

11. Dispositif selon une des revendications 6 à 10, caractérisé en ce que le dispositif de pesée comporte un vase de pesée (25) fixé à une extrémité d'un ressort à lame (26) dont l'autre extrémité est maintenue par un support (29) pivotant sur un axe (28) parallèle au ressort, dans la paroi du vase (23).

12. Dispositif selon une des revendications 6 à 11, caractérisé en ce que le ressort à lame (26) est pourvu d'une bobine (17) en tant que détecteur relié à un dispositif de mesure et d'enregistrement électrique connu en soi.

13. Dispositif selon une des revendications 6 à 12, caractérisé en ce que le dispositif d'introduction de l'échantillon (10) est constitué par une tubulure d'admission (18) pivotante, séparée étanchement de la chambre séparatrice, orientée dans le sens d'écoulement du liquide de séparation s'écoulant au régime laminaire à une vitesse uniforme, et communiquant avec un dispositif de mélange de l'agrégat (24), qui est reliée par des translateurs d'oscillations (20) à au moins un dispositif (19) de production d'oscillations mono- ou pluridimensionnelles, par exemple une bobine de self.

14. Dispositif selon une des revendications 6 à 13, caractérisé en ce que le dispositif d'introduction de l'échantillon (10) est constitué par une tubulure d'admission (18) orientée dans le sens d'écoulement du liquide de séparation s'écoulant au régime laminaire à une vitesse uniforme, et communiquant avec un dispositif de mélange de l'agrégat (24) et que des oscillations sont imprimées directement au mélange du liquide véhicule et de l'échantillon au moyen d'un dispositif de pulsation (21) relié à la tubulure d'admission, des translateurs d'oscillations (20, 22) et au moins un dispositif pour la production d'oscillations mono- ou pluridimensionnelles, p. ex. une bobine de self.

15. Dispositif selon une des revendications 6 à 14, caractérisé en ce que la tubulure d'admission (18) est reliée le cas échéant de manière flexible à un dispositif de prémélange (24), préférentiellement un mélangeur brasseur, dans lequel sont introduits l'échantillon et le liquide véhicule.

16. Dispositif selon une des revendications 6 à 15, caractérisé en ce que la section transversale libre de la tubulure d'admission (18) est au maximum égale à la section transversale libre de pièces rajoutées de la chambre séparatrice.

17. Dispositif selon une des revendications 6 à 16, caractérisé en ce que des lamelles (27) orientées essentiellement perpendiculairement au sens d'écoulement, sont disposées dans les compartiments récepteurs (7) et les compartiments collecteurs (8).

18. Dispositif selon une des revendications 6 à 17, caractérisé en ce que l'introduction de l'échantillon, l'arrivée de la fraction à peser au dispositif de pesée et son évacuation, le processus de pesée, la détermination quantitative optique, tous les processus de calibrage et la sortie des données de mesure, sont pilotés par un dispositif de commande automatique, par exemple par au moins un microprocesseur.

19. Dispositif selon une des revendications 6 à 18, caractérisé en ce que à partir de la granulométrie déterminée pour des charges successives de sable à béton jusqu'à un calibre de 5 mm, on établit l'écart entre valeurs effectives et valeurs prescrites de la composition granulométrie pour le processus de fabrication du béton, par exemple pour la fabrication d'éléments préfabriqués en béton et que la qualité spécifiée du béton est respectée grâce à une adaptation adéquate continue de l'apport des constituants du béton.

Fig.1

Schnitt F – F̄

Fig.2

0 0 1 2 7 4 0

Fig.3a

Fig. 3b

3

Fig. 4

Fig.5